# FASCICULE DE BREVET EUROPEEN

(11) **EP 1 813 529 B1**
(45) Date de publication et mention de la délivrance du brevet: **18.03.2009**
(21) Numéro de dépôt: 07101190.2
(22) Date de dépôt: 25.01.2007
(51) Int. Cl.: B64D 33/02, B64C 1/40, F02C 7/045

(54) **Entrée d'air de turboréacteur à double flux**
Lufteinlass eines Zweistrom-Turbinentriebwerks
Air intake of a turbofan engine

(30) Priorité: 27.01.2006 FR 0650297
(43) Date de publication de la demande: 01.08.2007
(73) Titulaire: SNECMA, 75015 Paris (FR)
(72) Inventeur: Chanez, Philippe, 75015 Paris (FR); Loheac, Pierre, 77170 Brie Comte-Robert (FR)
(74) Mandataire: David, Daniel

(56) Documents cités:
- GB-A- 2 372 019
- US-A- 5 058 617
- US-A- 5 702 231
- US-A- 5 915 403

## Description

La présente invention concerne le domaine des aéronefs propulsés par au moins un turboréacteur fixé à proximité de leur fuselage, notamment sous une aile, et vise un moyen pour atténuer le bruit émis par le moteur.

Les émissions sonores des moteurs civils à turbosoufflante ont deux origines principales : le jet en sortie de tuyère et le bruit de la soufflante à l'avant. La présente invention concerne le bruit émis vers l'avant de l'appareil par le moteur.

Ce bruit est constitué par la superposition d'un spectre de raies et d'un spectre à large bande : Le spectre de raies est composé des fréquences multiples du passage des aubes (FPA) d'une part et des fréquences multiples de la rotation (FMR) d'autre part, par ailleurs le spectre à large bande est associé aux écoulements turbulents dans le moteur.

Le bruit de type FPA ainsi que celui à large bande, ci-dessus, concernent essentiellement les zones au sol entourant les aéroports lors des opérations de décollage et d'atterrissage.

Le bruit de type FMR est associé aux cellules de chocs générées en régime transsonique au niveau du bord d'attaque de l'aube de soufflante et est présent sur toute la phase de décollage jusqu'au régime de croisière. Ce type de bruit contribue à la fois au bruit perçu au sol et en cabine. En effet pour une entrée d'air conventionnelle, les FMR rayonnent à basse fréquence et en amont du moteur avec un maximum de directivité compris entre les angles 60° et 80° par rapport à l'axe du moteur. Le bruit est donc peu atténué par la paroi du fuselage et est transmis dans la partie avant de la cabine.

Le turboréacteur est logé dans une nacelle comprenant une manche d'entrée d'air orientée dans l'axe de celui-ci, avec un bord d'attaque globalement annulaire à l'avant, au profil aérodynamique pour assurer le guidage de l'air aspiré par le moteur. Afin de limiter les effets du bruit émis vers l'avant par le moteur en direction du sol, on a proposé d'utiliser des nacelles ayant un profil d'entrée en forme de biseau. Le plan d'entrée du moteur, dit aussi plan hilite, est ainsi incliné vers l'arrière par allongement de la partie inférieure de la manche d'entrée d'air. La lèvre inférieure s'étend vers l'avant du plan d'entrée conventionnel. Cette forme permet à une plus grande partie du bruit émis vers l'avant d'être réfléchie et déviée vers le haut. Pour parvenir à ce but, la forme du profil d'entrée peut aussi être en écope. Quelle qu'elle soit, la forme est déterminée de manière à ne pas avoir d'influence négative sur les performances du moteur pendant les différentes phases de vol. On modifie ainsi l'enveloppe du cône de bruit. Le demi angle au sommet, dans le plan vertical, de la partie inférieure, est plus faible que le demi angle au sommet, dans ce même plan, de la partie supérieure. Il s'ensuit que la zone masquée par la manche d'entrée d'air est plus étendue dans la partie inférieure. Des entrées d'air convenablement conformées pour atténuer le bruit au sol lors des phases d'atterrissage ou de décollage, sont décrites par exemple dans les brevets EP 823 547, EP 1308387, EP 1071608 , US3946830ou US 5 058 617.

Ce mode d'atténuation du bruit ne permet pas cependant de produire un effet favorable sur le bruit perçu dans la cabine.

La demanderesse s'est dont fixé l'objectif de trouver un moyen simple d'atténuer le bruit perçu en cabine à l'avant du moteur.

L'invention concerne donc une entrée d'air pour nacelle de turboréacteur à soufflante avant comportant une partie supérieure, une partie inférieure, une partie latérale intérieure et une partie latérale extérieure. Les dites parties définissent entre elles un bord d'attaque entre une paroi externe de la nacelle et une paroi interne formant le canal d'alimentation en air du turboréacteur. L'entrée d'air de la nacelle est caractérisée par le fait que le bord d'attaque de la partie latérale extérieure est en arrière par rapport au bord d'attaque de la partie latérale intérieure.

On définit le côté intérieur et le côté extérieur par rapport à la position de la nacelle sur l'aéronef ; le côté intérieur est celui situé près du fuselage et le côté extérieur est celui qui en est éloigné. L'avant et l'arrière sont définis par rapport à la direction de déplacement du moteur.

L'invention permet donc de manière simple de réduire le bruit perçu dans la cabine de l'aéronef par le décalage du cône de bruit vers l'extérieur.

De préférence, le bord d'attaque de la partie supérieure est en arrière par rapport au bord d'attaque de la partie inférieure. On assure ainsi également l'atténuation du bruit vers le sol dans les phases de vol à proximité de l'aéroport.

Selon le mode de réalisation préféré le bord d'attaque reliant les différentes parties de l'entrée forme un plan, le plan étant incliné par rapport à l'axe du moteur.

On décrit un mode de réalisation non limitatif de l'invention en référence aux dessins sur lesquels
La figure 1 montre vue de côté la partie avant d'une nacelle de turboréacteur;
La figure 2 montre, vue de côté, côté extérieur, la partie avant d'une nacelle de turboréacteur conforme à l'invention ;
La figure 3 montre, vue de dessus la nacelle de la figure 2 montée sous une aile d'avion.
La figure 4 montre, vue de côté, côté extérieur, la partie avant d'une nacelle de turboréacteur conforme à l'invention dont le bord d'attaque n'est pas plan.

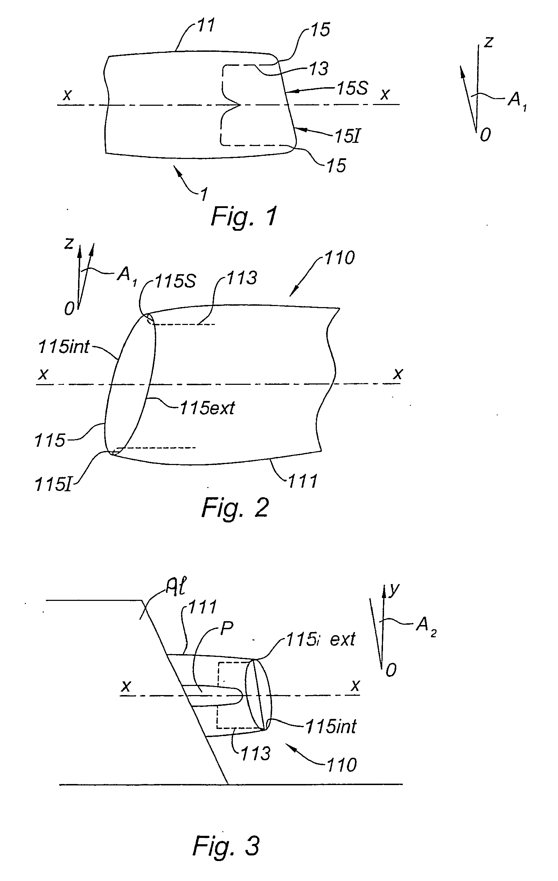

La nacelle 1 que l'on a représentée schématiquement forme l'enveloppe d'un turboréacteur à double flux, non visible, avec une soufflante avant. L'avant est vers la droite, sur la figure 1. Dans les avions civils un tel moteur est le plus souvent accroché sous l'aile par l'intermédiaire d'un pylône non visible ici. La nacelle est conformée avec un profil aérodynamique de manière à produire une traînée sur les surfaces extérieures et intérieures aussi faible que possible et pour ce qui est de l'entrée d'air à assurer un écoulement sans turbulence dans les différentes phases du vol, notamment au décollage. On distingue la surface externe 11 de la nacelle, la surface interne 13, représentée en traits pointillés, et une lèvre 15 formant la surface de jonction entre les deux premières. Cette lèvre définit le bord d'attaque. Le canal d'admission d'air défini par la surface interne 13 forme un col en arrière du bord d'attaque. On distingue une partie supérieure 15S de la lèvre 15 et une partie inférieure 15I par rapport à un plan horizontal passant par l'axe XX du moteur, lui-même horizontal ici.

La nacelle de la figure 1 présente selon l'art antérieur un bord d'attaque incliné vers l'arrière. Comme on le voit, la partie supérieure 15S est en arrière par rapport à la partie inférieure 15I. De préférence, le bord d'attaque est situé dans un seul plan comme cela est illustré mais il peut aussi présenter un profil non rectiligne. La partie inférieure comporte ainsi une plus grande surface de réflexion des ondes sonores vers le haut lorsque l'avion est en vol. La valeur de l'angle A1, défini entre le plan formé par la lèvre 15 et la direction verticale est limitée par les risques de décollement des filets d'air pénétrant dans la manche d'entrée d'air, notamment sur la partie supérieure. On considère en général que l'angle A1 ne doit pas être supérieur à 15°.

En se reportant à la figure 2, on voit une nacelle 110 conforme à l'invention, vue du côté extérieur par rapport à l'avion sur lequel elle est montée. Celui-ci n'est pas représenté, Sur la figure 3 la nacelle 110 est vue de dessus, accrochée sous une aile A1, ici l'aile gauche de l'avion, par l'intermédiaire d'un pylône P .

Cette nacelle 110 présente les mêmes caractéristiques qu'une nacelle de l'art antérieur à l'exception de la manche d'entrée d'air. On distingue les surfaces externes 111 et internes 113, ainsi que la lèvre 115 formant le bord d'attaque de la nacelle 110. Comme dans le cas précédent, pour ce mode de réalisation, le bord d'attaque de la partie inférieure 115I de la lèvre 115 est en avant par rapport au bord d'attaque de la partie supérieure 115S.

La nacelle présente un bord d'attaque latéral extérieur 115Ext et un bord d'attaque latéral intérieur 115int, qui se situent d'un côté et de l'autre d'un plan vertical passant par l'axe du moteur. On définit les bords extérieur et intérieur par rapport à la position de la nacelle sur l'aéronef. Par exemple pour une nacelle montée sur le côté droit de l'aéronef, le bord d'attaque extérieur est le bord d'attaque latéral droit de la nacelle et le bord d'attaque latéral intérieur en est le bord d'attaque gauche.

Conformément à l'invention, le bord latéral extérieur 115ext est en arrière par rapport au bord latéral intérieur 115int. Cette disposition permet de ménager une plus grande surface de réflexion sur la face interne 113 de la partie latérale intérieure de la manche d'entrée d'air. Ici le bord d'attaque 115 est dans un seul plan. Ce plan est donc à la fois incliné d'un angle A1 par rapport à une droite verticale Oz passant par l'axe du moteur, figure 2, et d'un angle A2 par rapport à une droite horizontale Oy perpendiculaire à l'axe du moteur, figure 3. L'angle peut être le même dans les deux cas ou différent. L'invention couvre également le cas où l'angle A1 est nul. L'angle A1 est compris de préférence entre 0° et 15° et l'angle A2 est compris, de préférence, entre 0 et 15°, 0° non compris.

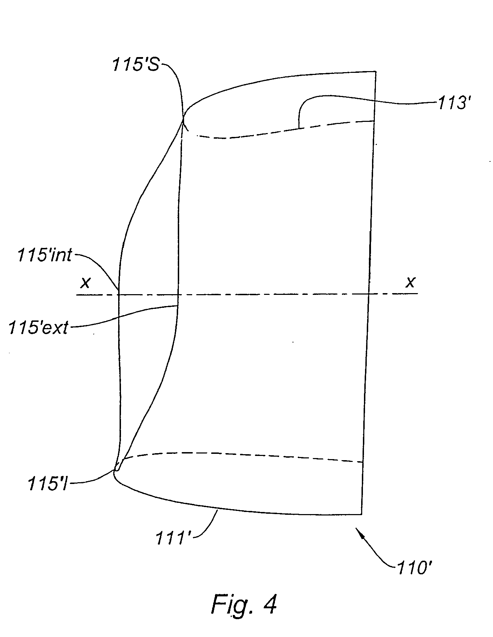

Par ailleurs, le mode de réalisation des figures 1 à 3 se rapporte à une entrée où le bord d'attaque est dans un seul plan. Cependant l'invention couvre également le cas où le bord d'attaque présente une forme en écope ou est au moins dans deux plans différents ou encore à profil du bord d'attaque plus complexe. On a représenté sur la figure 4 un tel exemple de réalisation. Les éléments portent la même référence avec l'indication prime.

La surface interne 113 ou 113' de la manche d'entrée est de préférence traitée avec un matériau destiné à absorber les ondes sonores comme cela est connu. De même, le profil de la manche d'entrée en particulier au niveau du bord d'attaque est conformé aérodynamiquement de manière à éviter les décollements des filets d'air entrant dans le canal d'admission.

## Revendications

1. Entrée d'air pour nacelle de turboréacteur à soufflante avant comportant une partie supérieure (115S) , une partie inférieure (115I), une partie latérale intérieure (115int) et une partie latérale extérieure (115ext), définissant ensemble un bord d'attaque (115) entre une paroi externe (111) de la nacelle et une paroi interne (113) formant le canal d'alimentation en air du turboréacteur, **caractérisée par le fait que** le bord d'attaque de la partie latérale extérieure (115ext) est en arrière par rapport au bord d'attaque de la partie latérale intérieure (115int).

2. Entrée d'air selon la revendication 1 dont le bord d'attaque de la partie supérieure (115S) est en arrière par rapport au bord d'attaque de la partie inférieure (115I).

3. Entrée d'air selon la revendication précédente dont le bord d'attaque (115) forme un plan, le plan étant incliné par rapport à l'axe du moteur.

4. Entrée d'air selon la revendication précédente dont ledit plan est incliné d'un angle A1 par rapport à la verticale compris entre 0° et 15°.

5. Entrée d'air selon la revendication 3 ou 4 dont le dit plan est incliné d'un angle A2 par rapport à une droite horizontale perpendiculaire à l'axe XX du moteur, compris entre 0° et 15°, 0° non compris.

6. Entrée d'air selon les revendications 1 et 2, dont le bord d'attaque forme une surface en écope ou de forme complexe

7. Turboréacteur à double flux dont l'entrée d'air de la nacelle est conformée selon l'une des revendications 1 à 6.

## Claims

1. An air inlet for a nacelle of a jet engine with a front fan, comprising an upper part (115S), a lower part (115I), an inner lateral part (115int) and an outer lateral part (115ext), together defining a leading edge (115) between an external wall (111) of the nacelle and an internal wall (113) forming the air supply channel of the jet engine, wherein the leading edge of the outer lateral part is to the rear with respect to the leading edge of the inner lateral part (115int).

2. The air inlet as claimed in claim 1, in which the leading edge of the upper part (115S) is to the rear with respect to the leading edge of the lower par (115I).

3. The air inlet as claimed in the preceding claim, in which the leading edge (115) forms a plane, the plane being inclined with respect to the axis of the engine.

4. The air inlet as claimed in the preceding claim, in which said plane is inclined with respect to the vertical by an angle A1 of between 0° and 15°.

5. The air inlet as claimed in claim 3 or 4, in which said plane is inclined with respect to a horizontal line perpendicular to the axis XX of the engine by an angle A2 of between 0° and 15°, excluding 0°.

6. The air inlet as claimed in claims 1 and 2, in which the leading edge forms a scoop surface or a surface of complex shape.

7. A turbofan engine in which the air inlet of the nacelle is configured as claimed in one of claims 1 to 6.

## Patentansprüche

1. Lufteinlass für die Gondel von TL-Triebwerken mit vorderem Gebläse, der einen oberen Teil (115S), einen unteren Teil (115I), einen inneren seitlichen Teil (115int) und einen äußeren seitlichen Teil (115ext) umfasst, die zusammen eine Vorderkante (115) zwischen einer Außenwand (111) der Gondel und einer den Luftzufuhrkanal des TL-Triebwerks bildenden Innenwand (113) bilden,
**dadurch gekennzeichnet,**
**dass** sich die Vorderkante des äußeren seitlichen Teils (115ext) weiter hinten als die Vorderkante des inneren seitlichen Teils (115int) befindet.

2. Lufteinlass nach Anspruch 1, bei dem sich die Vorderkante des oberen Teils (115S) weiter hinten als die Vorderkante des unteren Teils (115I) befindet.

3. Lufteinlass nach dem vorherigen Anspruch, bei dem die Vorderkante (115) eine Ebene bildet, wobei die Ebene zur Achse des Motors geneigt ist.

4. Lufteinlass nach dem vorherigen Anspruch, bei dem diese Ebene zur Vertikalen mit einem Winkel A1 geneigt ist, der zwischen 0° und 15° beträgt.

5. Lufteinlass nach Anspruch 3 oder 4, bei dem diese Ebene zu einer horizontalen Geraden, die im rechten Winkel zur Achse XX des Motors verläuft, mit einem Winkel A2 geneigt ist, der zwischen 0° und 15° beträgt, wobei 0° nicht vorgesehen ist.

6. Lufteinlass nach den Ansprüchen 1 und 2, bei dem die Vorderkante eine schöpferartige oder komplex geformte Oberfläche aufweist.

7. Zweikreis-TL-Triebwerk, bei dem der Lufteinlass der Gondel gemäß einem der Anspruche 1 bis 6 geformt ist.
